# EUROPEAN PATENT SPECIFICATION

(11) **EP 3 769 985 B1**
(45) Date of publication and mention of the grant of the patent: **18.10.2023**
(21) Application number: 20184554.2
(22) Date of filing: 07.07.2020
(51) Int. Cl.: B60H 1/00, B60H 1/24, B60H 1/26, B60Q 1/00, F21S 45/43, F21S 45/60

(54) **UTILITY VEHICLE**
NUTZFAHRZEUG
VÉHICULE UTILITAIRE

(30) Priority: 24.07.2019 GB 201910559
(43) Date of publication of application: 27.01.2021
(73) Proprietor: AGCO International GmbH, 8212 Neuhausen am Rheinfall (CH)
(72) Inventor: HAF, Dieter, 87616 Marktoberdorf (DE); ZELLER, Alexander, 87616 Marktoberdorf (DE); Kögel, Fabian, 87616 Marktoberdorf (DE); Schleich, Christian, 87616 Marktoberdorf (DE)
(74) Representative: AGCO Intellectual Property Department

(56) References cited:
- EP-A1- 2 527 172
- DE-A1- 3 138 360
- DE-U1-202018 104 381
- US-A- 2 073 159

## Description

### FIELD OF THE INVENTION

The present invention relates to a utility vehicle.

### BACKGROUND

Agricultural vehicles are known to operate in environments in which the build-up of dust and similar contaminants can adversely affect the operation of vehicle components. In some instances, separate cooling/cleaning fans are provided to combat the build-up, but the provision and control of such additional components presents a cost penalty to the producers and purchasers of such vehicles. One such component which may be adversely affected by contaminant build-up is the external lights (headlights, sidelights, indicator lights etc.) of the vehicle. Overheating due to dust build-up can adversely affect performance and lead to early failure, necessitating replacement during cleaning or enforced downtime of the vehicle.

EP2527172 A1 discloses an agricultural vehicle having a driver cabin, means for supplying fresh air to the driver cabin and an exhaust air path from the driver cabin into the open, wherein the exhaust air path comprises a check valve for preventing air flow from the open into the cabin.

DE3138360 A1 discloses a system in which air from the interior of a vehicle is directed into the interior of a headlight to reduce condensation inside the light.

US 2,073,159 discloses an illuminated signal unit for mounting to the roof of a commercial vehicle such as a taxi. Apertures in the roof connect the interior of the vehicle and the interior of the signal unit. A series of vents are provided in an upper surface of the signal unit near its front. As the vehicle moves forwardly, air flowing up over a forward face of the signal unit and reward over the top of the signal unit create a region of low pressure above the vents so that air is drawn out of the signal unit. The resulting flow of air from the interior of the vehicle through the signal unit helps to prevent the build-up of snow and ice.

DE 20 2018 104 381 U1 discloses a valve assembly for realising over pressure from the interior of a vehicle. The valve assembly includes a valve flap with a first shape-memory alloy wire which urges the flap to an open position and a second shape-memory alloy wire which urges the flap to a closed position. In one embodiment, the valve assembly is located in a cavity to receive a rear light cluster.

### SUMMARY OF THE INVENTION

In accordance with the invention there is provided a utility vehicle as defined in claim 1, with optional features of the vehicle set out in the claims dependent on claim 1.

By diverting air already provided to the cab, it is not necessary to provide an additional fan (and associated control means) to provide ventilation to the driving light.

### BRIEF DESCRIPTION OF THE DRAWINGS

Embodiments of the present invention will now be described by way of example only, and with reference to the accompanying drawings, in which:
Figure 1 shows a schematic view of an agricultural vehicle in the form of a tractor having a first embodiment of a lighting unit ventilation system;
Figure 2 shows a detail of a suitable valve arrangement for use in the ventilation system of Fig. 1;
Figure 3 is a plan schematic of an agricultural vehicle illustrating additional features of, and variations to, the system of Fig. 1; and
Figure 4 shows a further embodiment in the form of a roof installation.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments.

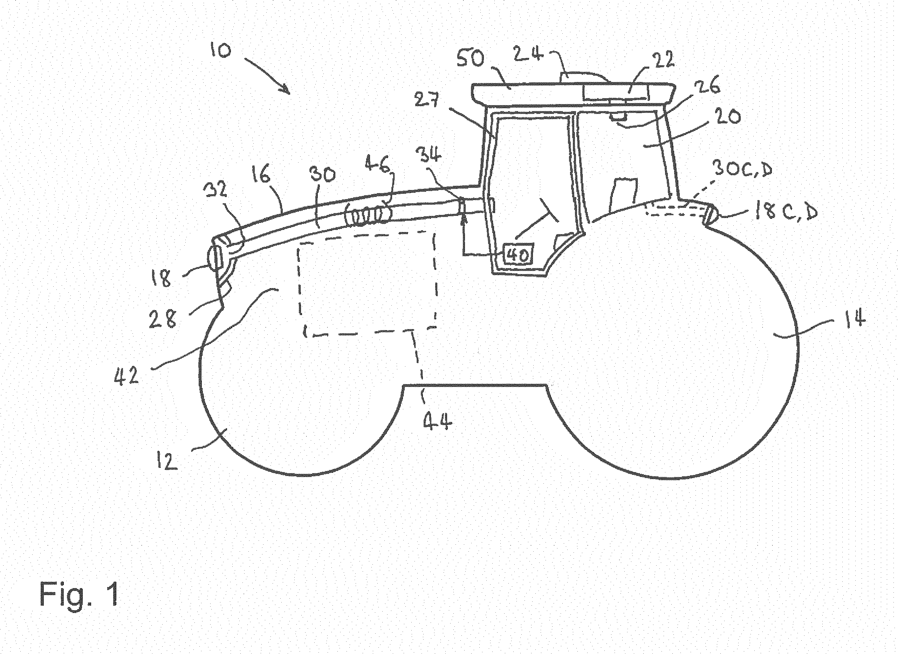

Figure 1 shows an agricultural vehicle, in the form of a tractor 10.

The vehicle 10 has front and rear wheels 12, 14, a body 16 on which is mounted at least one driving light 18 operable to illuminate an area external to the vehicle, and an enclosed cab 20 within which an operator of the vehicle is situated and from which the operator controls operation of the vehicle.

The cab 20 includes a heating, ventilation and air conditioning (HVAC) system 22 arranged to draw in atmospheric air via an inlet 24 and supply temperature-controlled air to the cab via one or more in-cab outlets 26. Whilst the inlet 24 and outlet 26 for the HVAC system are illustrated on the roof of the cab 20, it will be readily appreciated that other variants are possible, for example with outlet vents in the floor of the cab.

Furthermore, cab 20 is provided with at least one door 27 to enable the operator to enter or leave the cab.

The driving light 18 typically comprises a cluster of two or more lights, such as a headlamp, a work light (used to illuminate implements or the worked area around the tractor), and one or more side or running lights, and optionally also directional turn-indicator lights. The light 18 or cluster of lights has a rear shroud or housing 28 partially enclosing the light. Whilst such a shroud provides some protection against the build-up of dust and other contaminants on the exterior of the light 18 within the body 16 of the vehicle, it can also act to trap such contaminating material that reaches the interior of the shroud 28.

To address this issue, a conduit 30 is arranged to carry air from the cab 20 (due to the pressure provided by the HVAC supply 22), with the conduit 30 and having an outlet (discharge end) 32 arranged to direct the air flow from the cab towards the at least one driving light. Whilst the outlet 32 may simply be directed towards the light 18, it is preferred that it feeds directly into the shroud 28 to blow out dust and other contaminants and thereby reduce the build-up which may otherwise lead to early failure of the light 18 through overheating.

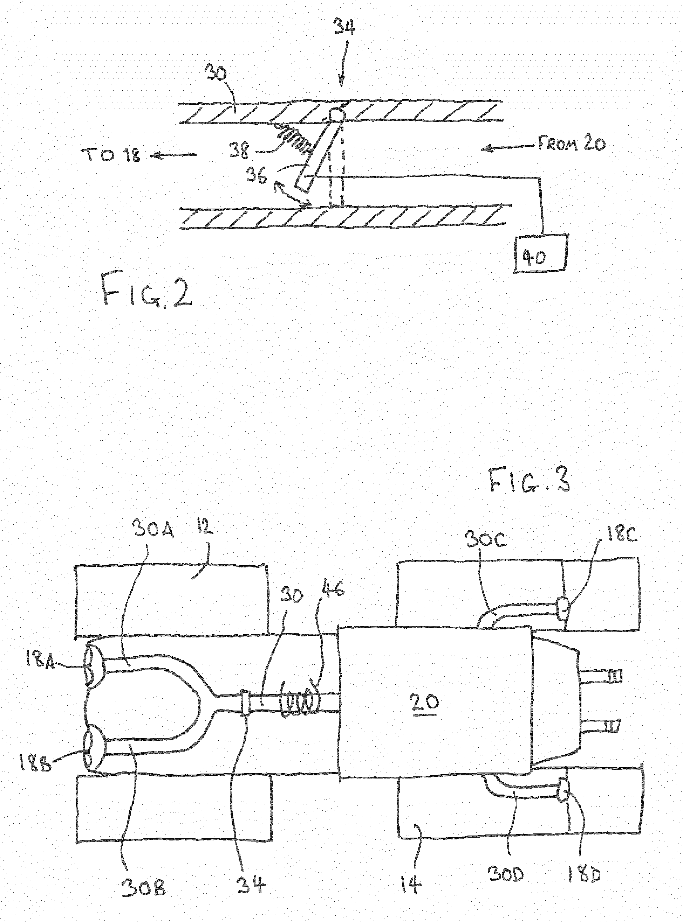

Referring additionally to Figure 2, the conduit 30 is provided with a valve arrangement 34 configured to open or close the conduit to the flow of air from the cab 20 to the light 18. As shown, the valve arrangement 34 may comprise a simple flap 36 biased to the closed position by a spring 38, which flap opens in the event of an over-pressure (e.g. pressure above atmospheric) in the cab due to air inflow from the HVAC 22. This flap 36 may also be necessary to discharge excessive over-pressure when the tractor cab door is slammed shut as the abrupt increase in air pressure in the cab caused by the slammed door 27 may be sufficient to stop the door 27 reaching its fully shut position.

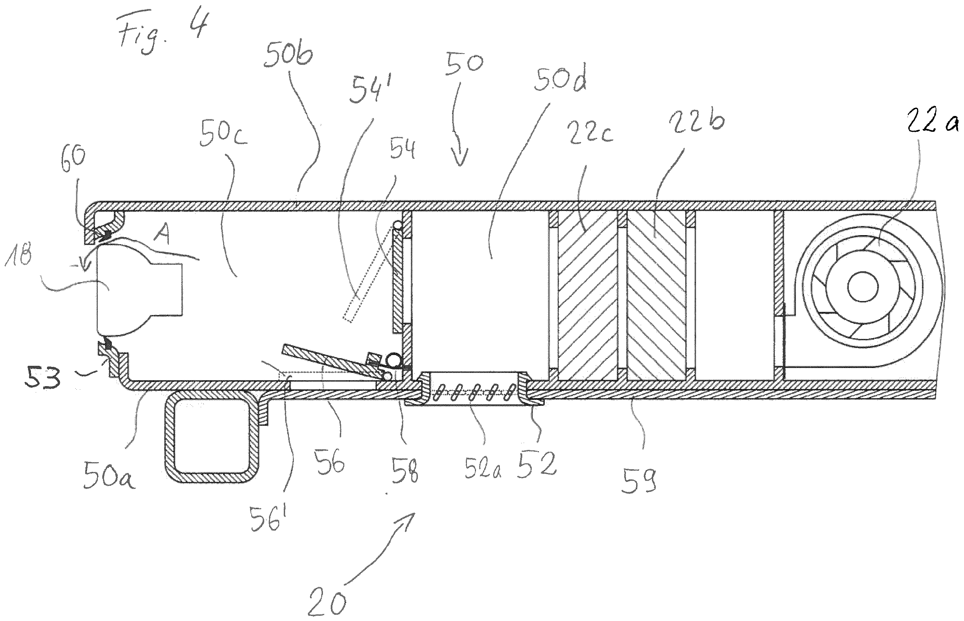

(Discharging air from the cab when doors are slammed is discussed further in the present applicant's European patent EP 2726307B). In this case, the flap 36 and conduit 30 may be installed in the roof of the cab to direct the air flow from the cab towards a work light of the type typically installed in the roof of the cab. Such an arrangement is described further below with reference to Figure 4 of the drawings.

Additionally to the sprung flap, a user-operable control 40 may be provided to enable a user in the cab 20 to selectively enable or disable the airflow to the light 18. The valve arrangement 34 may be disposed at the cab end or discharge end of the conduit 30 or at some point in between. The user-operable control 40 may be a simple lever or, for example, a solenoid connected and operable to move the flap 36 between an open and closed position.

As shown in Figure 1, the utility vehicle may comprise an engine compartment 42 housing a motive power unit 44 such as a diesel or electric motor arranged to drive the vehicle 10. For forward facing lights 18, the conduit 30 passes through this engine compartment 42. The conduit 30 may be a discrete entity, such as a length of tubing or trunking, or it may be formed as a channel in the structure of the bodywork (housing 16) surrounding the motive power unit.

Referring additionally to Figure 3, the vehicle will typically have two or more driving lights 18A, 18B (or clusters of driving lights) and each may be with a respective conduit 30 arranged to carry air from the cab 20 or - as shown - all forward facing lights 18A, 18B may be fed from a single outlet 30 from the cab which then branches into separate conduits 30A, 30B. Further conduits 30C, 30D (with respective valve arrangements) may also be provided for rear facing lights 18C, 18D.

Although primarily concerned with ventilation/dust-clearing for the lights, cold operating conditions may also require the provision of a defrost functionality, especially as e.g. LED lights tend to freeze easily as they do not generate excessive heat such has other types of lights (e.g. filament or halogen lamps). Whilst this may be achieved by the air temperature in the cab 20 (as provided by the HVAC 22), for extreme operating conditions the system may further comprise a heater operable to raise the temperature of air passing through the conduit. Such a heater may suitably comprise an electric coil 46 disposed within or around the conduit 30.

A further embodiment is schematically depicted with Figure 4 showing a roof installation.

The cab 20 includes a roof unit 50 which houses a heating, ventilation and air conditioning (HVAC) system 22 arranged to supply temperature-controlled air to the cab via one or more in-cab outlets 52. Roof unit 50 comprises a lower roof part 50a and an upper roof part 50b. Lights 18, in this case a work light, is assembled on light support part 53 which is mounted to lower roof part 50a. Lower roof part 50a offers structural support for internally mounted components such as the HVAC system 22 which comprises a blower 22a, a heat exchanger 22b (for heating the air) and an evaporator 22c (for cooling down the air). Furthermore, overpressure discharge flap 56 is also mounted to the lower roof part 50a and biased by (torsion) spring 58. The closed position of overpressure discharge flap 56 is indicated with dotted lines (56'). When the door is slammed, air from cab interior is forced through air-permeable roof liner 59 and overpressure discharge flap 56 into a first cavity 50c formed by lower roof part 50a, upper roof part 50b and light support part 53. Air in first cavity 50c is then discharged to the ambient in the vicinity of the lights 18 so that they can be cooled or cleaned (indicated with arrow A). Any of roof part 50a, upper roof part 50b and light support part 53 may be provided by respective contours to guide the air for sufficient air application on the lights 18. In addition, the gaps between light support part 53 and the lights 18 may be provided with a seal 60 which is opened by overpressure air from first cavity 50c but which is forced in closed contact with the lights when air and/or dust impacts from ambient. (The sealing lip of seal 60 is shown in open position above lights 18 and in closed position below lights 18)

Furthermore, lower roof part 50a and an upper roof part 50b form a second cavity 50d for guiding air of the HVAC system 22. Air pushed by blower 22a through heat exchanger 22b and/or evaporator 22c is, in a first operation, passing second cavity 50d and then flowing through cab outlet 52 into cab 20 or towards the operator. In a second operation, cab outlet 52 would be blocked by pivoting fins 52a arranged in louvre fashion in the outlet 52 into a closing position indicated with dotted lines. Closure of the outlet may be effected manually or by an electric motor drive controlled by user-operable control 40. As a consequence of closure, the overpressure in cavity 50d would then make the air pass connecting flap 54 (open position indicated with 54'), biased by a spring or an electric motor drive controlled by user-operable control 40, to enter first cavity 50c. With overpressure discharge flap 56 forced into closed position 56', the air trapped in first cavity 50c is also discharged to the ambient in the vicinity of the lights 18 so that they can be cooled, cleaned or defrosted (indicated with arrow A). Alternatively, connecting flap 54 may be designed so that the airflow to any cab outlet is blocked and air stream is completely guided to the lights.

More advantageously, if the HVAC system is designed as a pre-heating system (operational in stand-alone mode) the lights can be cooled, cleaned or defrosted prior to driving with the vehicle.

The first and second cavity 50c, 50d in the shown embodiment are suitably provided by multiple injection moulded parts sealed and fixed in known manner by screwing or riveting, but alternatively may be provided by one part e.g. formed by rotational moulding.

In the foregoing the applicants have described a utility vehicle in the form of a tractor 10 which comprises a body 16 on which is mounted at least one driving light 18 operable to illuminate an area external to the vehicle. An enclosed cab 20 includes an HVAC system 22 arranged to supply temperature-controlled air to the cab 20. To facilitate ventilation and dust removal for the driving light or lights 18, a conduit 30 is arranged to carry air from the cab 20 and to direct said air towards the light or lights 18. A surrounding shroud arrangement 28 may also be provided to direct airflow. A valve arrangement 34 is suitably provided to control airflow within the conduit 30, and a heater may be provided to warm the airflow in the conduit 30 to facilitate defrosting.

From reading of the present disclosure, other modifications will be apparent to those skilled in the art and the scope of the invention is limited only by the following claims.

## Claims

1. A utility vehicle (10) which is a tractor and comprises:
a body (16) on which is mounted at least one driving light (18) operable to illuminate an area external to the vehicle (10), wherein the at least one driving light (18) is a headlamp (18A, 18B), or a rear-facing light (18C, 18D), or a directional indicator light, or a work light;
an enclosed cab (20) within which an operator of the vehicle (10) is situated and from which the operator controls operation of the vehicle (10);
a door (27) enabling an operator to enter or leave the cab (20);
a heating, ventilation and air conditioning (HVAC) system (22) arranged to supply temperature-controlled air to the cab (20); and
a conduit (30) arranged to carry air from the cab (20); **characterized in that** the conduit (30) has an outlet (32) arranged to direct said air towards the at least one driving light (18), the utility vehicle (10) further comprises a valve arrangement (34) configured to open or close the conduit (30) to the flow of air from the cab (20) to the at least one driving light (18), and the valve arrangement (34) is configured to open automatically in the event of an over-pressure in the cab (20).

2. A utility vehicle (10) as claimed in claim 1, further comprising an engine compartment (42) housing a motive power unit (44) arranged to drive the vehicle (10), wherein the conduit (30) passes through the engine compartment (42).

3. A utility vehicle (10) as claimed in claim 1, wherein the valve arrangement (34) is configured to open automatically in the event of an over-pressure in the cab (20) generated by the HVAC system (22).

4. A utility vehicle (10) as claimed in claim 1, wherein the valve arrangement (34) is configured to open automatically in the event of an over-pressure in the cab (20) generated by the door (27) being slammed shut.

5. A utility vehicle (10) as claimed in any one of claims 1 to 4, wherein the valve arrangement (34) comprises a sprung flap (36, 38).

6. A utility vehicle (10) as claimed in any preceding claim, further comprising a housing (28) partially enclosing the said at least one driving light (18), wherein the conduit (30) is connected to deliver air to the interior of the housing (28).

7. A utility vehicle (10) as claimed in any preceding claim, having two or more driving lights (18A, 18B) each with a respective conduit (30A, 30B) arranged to carry air from the cab (20).

8. A utility vehicle (10) as claimed in claim 6, having two or more driving lights (18A, 18B) mounted in a cluster, with the housing (28) partially enclosing the cluster.

9. A utility vehicle (10) as claimed in any preceding claim, further comprising a heater (46) operable to raise the temperature of air passing through the conduit (30).

10. A utility vehicle (10) as claimed in claim 9, wherein the heater (46) is an electric coil disposed within or around the conduit (30).

## Patentansprüche

1. Nutzfahrzeug (10), das ein Schlepper ist und aufweist:
eine Karosserie (16), an der mindestens ein Fahrlicht (18) montiert ist, das betreibbar ist, um einen Bereich außerhalb des Fahrzeugs (10) zu beleuchten, wobei das mindestens eine Fahrlicht (18) ein Frontscheinwerfer (18A, 18B) oder ein Rückfahrlicht (18C, 18D) oder ein Fahrtrichtungsanzeigerlicht oder ein Arbeitslicht ist;
eine geschlossene Kabine (20), in der ein Bediener des Fahrzeugs (10) untergebracht ist und von der aus der Bediener den Betrieb des Fahrzeugs (10) steuert;
eine Tür (27), die es dem Bediener ermöglicht, die Kabine (20) zu betreten oder zu verlassen;
ein Heizungs-, Belüftungs- und Klimatisierungs- (Heating, Ventilation and Air Conditioning = HVAC) System (22), das angeordnet ist, um der Kabine (20) temperaturgeregelte Luft zuzuführen; und
eine Leitung (30), die angeordnet ist, um Luft aus der Kabine abzuführen;
**dadurch gekennzeichnet, dass** die Leitung (30) einen Auslass (32) aufweist, der angeordnet ist, um die Luft auf das mindestens eine Fahrlicht (18) zu richten, wobei das Nutzfahrzeug (10) weiterhin eine Ventilanordnung (34) aufweist, die konfiguriert ist, um die Leitung (30) für den Strom von Luft aus der Kabine (20) zu dem mindestens einen Fahrlicht (18) zu öffnen und zu schließen, und wobei die Ventilanordnung (34) konfiguriert ist, um im Falle eines Überdrucks in der Kabine (20) automatisch zu öffnen.

2. Nutzfahrzeug (10) wie in Anspruch 1 beansprucht, das weiterhin einen Motorraum (42) aufweist, der eine Triebwerksanlage (44) aufnimmt, welche angeordnet ist, um das Fahrzeug (10) anzutreiben, wobei die Leitung (30) durch den Motorraum (42) verläuft.

3. Nutzfahrzeug (10) wie in Anspruch 1 beansprucht, wobei die Ventilanordnung (34) konfiguriert ist, um im Falle eines Überdrucks in der Kabine, der von dem HVAC-System (22) erzeugt wird, automatisch zu öffnen.

4. Nutzfahrzeug (10) wie in Anspruch 1 beansprucht, wobei die Ventilanordnung (34) konfiguriert ist, im Falle eines Überdrucks in der Kabine (20) automatisch zu öffnen, der von der Tür (27) erzeugt wird, wenn diese zugeschlagen wird.

5. Nutzfahrzeug (10) wie in einem der Ansprüche 1 bis 4 beansprucht, wobei die Ventilanordnung (34) eine Federklappe (36, 38) aufweist.

6. Nutzfahrzeug (10) wie in einem der vorhergehenden Ansprüche beansprucht, das weiterhin ein Gehäuse (28) aufweist, welches das mindestens eine Fahrlicht (18) teilweise umschließt, wobei die Leitung (30) angeschlossen ist, um Luft in das Innere des Gehäuses (28) zu führen.

7. Nutzfahrzeug (10) wie in einem der vorhergehenden Ansprüche beansprucht, das zwei oder mehr Fahrlichter (18A, 18B) aufweist, jedes mit einer entsprechenden Leitung (30A, 30B), die angeordnet ist, um Luft von der Kabine (20) abzuführen.

8. Nutzfahrzeug (10) wie in Anspruch 6 beansprucht, das zwei oder mehr Fahrlichter (18A, 18B) aufweist, welche in einem Cluster innerhalb des Gehäuses (28) montiert sind, wobei das Gehäuse das Cluster teilweise umschließt.

9. Nutzfahrzeug (10) wie in einem der vorhergehenden Ansprüche beansprucht, das weiterhin eine Heizung (46) aufweist, welche betreibbar ist, um die Temperatur von Luft zu erhöhen, welche durch die Leitung (30) hindurch tritt.

10. Nutzfahrzeug (10) wie in Anspruch 9 beansprucht, wobei die Heizung (46) eine elektrische Wicklung ist, die in der oder um die Leitung (30) herum angeordnet ist.

## Revendications

1. Véhicule utilitaire (10) qui est un tracteur et comprend :
une carrosserie (16) sur laquelle est monté au moins un phare de conduite (18) pouvant être utilisé afin d'éclairer la zone externe au véhicule (10), dans lequel le au moins un phare de conduite (18) est un phare (18A, 18B) ou un phare arrière (18C, 18D) ou un phare de signalisation directionnel ou un phare de travail ;
une cabine fermée (20) à l'intérieur de laquelle un opérateur du véhicule (10) est situé et à partir de laquelle l'opérateur commande le fonctionnement du véhicule (10) ;
une porte (27) permettant à un opérateur d'entrer dans la cabine (20) ou d'en sortir ;
un dispositif de chauffage, de ventilation et de climatisation (HVAC) (22) agencé afin de fournir de l'air à température commandée à la cabine (20) ; et
un conduit (30) agencé afin de transporter de l'air à partir de la cabine (20) ; **caractérisé en ce que** que le conduit (30) comporte une sortie (32) agencée afin de diriger ledit air vers le au moins un phare de conduite (18), le véhicule de service (10) comprend, en outre, un agencement de vanne (34) configuré de manière à ouvrir ou fermer le conduit (30) d'écoulement de l'air à partir de la cabine (20) vers le au moins un phare de conduite (18), et
l'agencement de vanne (34) est configuré de manière à s'ouvrir automatiquement dans le cas d'une surpression dans la cabine (20).

2. Véhicule utilitaire (10) selon la revendication 1, comprenant, en outre, un compartiment moteur (42) contenant un groupe motopropulseur (44) agencé de manière à entraîner le véhicule (10), dans lequel le conduit (30) traverse le compartiment moteur (42).

3. Véhicule utilitaire (10) selon la revendication 1, dans lequel l'agencement de vanne (34) est configuré de manière à s'ouvrir automatiquement dans le cas d'une surpression produite par le dispositif HVAC (22) dans la cabine (20).

4. Véhicule utilitaire (10) selon la revendication 1, dans lequel l'agencement de vanne (34) est configuré de manière à s'ouvrir automatiquement dans le cas d'une surpression produite dans la cabine (20) par le claquement en fermeture de la porte (27),

5. Véhicule utilitaire (10) selon l'une quelconque des revendications 1 à 4, dans lequel l'agencement de vanne (34) comprend un volet préchargé (36, 38).

6. Véhicule utilitaire (10) selon l'une quelconque des revendications précédentes, comprenant, en outre, un logement (28) enveloppant partiellement ledit au moins un phare de conduite (18), dans lequel le conduit (30) est raccordé de manière à délivrer de l'air à l'intérieur du logement (28).

7. Véhicule utilitaire (10) selon l'une quelconque des revendications précédentes, comportant deux phares de conduite (18A, 18B) ou plus, chacun comportant un conduit respectif (30A, 30B) agencé de manière à acheminer de l'air à partir de la cabine (20).

8. Véhicule utilitaire (10) selon la revendication 6, comportant deux phares de conduite (18A, 18B) ou plus montés en groupe, le logement (28) enveloppant partiellement le groupe,

9. Véhicule utilitaire (10) selon l'une quelconque des revendications précédentes, comprenant, en outre, un réchauffeur (46) pouvant être utilisé de manière à élever la température de l'air passant à travers le conduit (30).

10. Véhicule utilitaire (10) selon la revendication 9, dans lequel le réchauffeur (46) est une spirale électrique disposée à l'intérieur ou autour du conduit (30).
